# EUROPÄISCHE PATENTSCHRIFT

(11) **EP 1 961 507 B1**
(45) Veröffentlichungstag und Bekanntmachung des Hinweises auf die Patenterteilung: **09.02.2011**
(21) Anmeldenummer: 07025161.6
(22) Anmeldetag: 28.12.2007
(51) Int. Cl.: B23B 31/26

(54) **Spannvorrichtung**
Clamping device
Dispositif de serrage

(30) Priorität: 26.02.2007 DE 102007009578
(43) Veröffentlichungstag der Anmeldung: 27.08.2008
(73) Patentinhaber: Röhm GmbH, 89567 Sontheim (DE)
(72) Erfinder: Röhm, Heinrich Peter, 89567 Sontheim (DE); Hangleiter, Eugen, 89568 Hermaringen (DE)
(74) Vertreter: Hentrich, Swen

(56) Entgegenhaltungen:
- EP-A- 0 291 048
- EP-A- 1 184 113
- DE-A1- 3 807 140
- DE-A1- 4 138 974

## Beschreibung

Die Erfindung betrifft eine Spannvorrichtung für einen Hohlschaft an einem Hohlschaftkegel, Werkzeug, Werkstück oder dergl., mit einer eine Spindelaufnahme für den Hohlschaft aufweisenden Arbeitsspindel und mit in der Hohlschaftaufnahme des Hohlschaftes ausgebildeten, geneigt verlaufenden Spannschrägen, an denen durch einen axial verschieblichen, in der Arbeitsspindel geführten Spannkopf betätigbare, an der Arbeitsspindel gelagerte Spannklauen mit korrespondierend geneigten Schrägflächen zur Anlage kommen.

Eine derartige Spannvorrichtung ist beispielsweise aus der DE 41 38 974 A1 bekannt, bei der die Spannklauen durch eine über eine Zugstange vermittelte axiale Verstellung des Spannkopfes aus einer Position, in der sie außer Eingriff mit dem Hohlschaftkegel sind, in eine Position verstellt werden, in der die Spannklauen im Eingriff mit dem Hohlschaftkegel sind, der üblicherweise mittels einer Ladeeinrichtung der Spannvorrichtung zugeführt wird. Derartige Hohlschaftkegel als Werkzeugaufnahmen haben sich in der Praxis bewährt und sind nach DIN 69893 genormt. Allerdings besteht das Problem, dass stets ein Fügungsspiel vorhanden ist, das die Genauigkeit beim Spannen sowie die Reproduzierbarkeit beeinträchtigt.

Der Erfindung liegt daher die Aufgabe zugrunde, eine Spannvorrichtung der eingangs genannten Art so auszubilden, dass die Genauigkeit des Spannvorganges erhöht werden kann.

Diese Aufgabe wird nach der Erfindung bei einer Spannvorrichtung der eingangs genannten Art dadurch gelöst, dass die Außenumfangsfläche des Hohlschaftes im Querschnitt eine nicht kreisförmige Gestalt und die Spindelaufnahme eine dazu korrespondierende Gestalt besitzt.

Bei dieser Ausführungsform ergibt sich der Vorteil, dass die zur Anlage bestimmten Flächen des Hohlschaftkegels sowie der Spindelaufahme paßgenau aufeinander abgestimmt sind und insbesondere eine Drehung um die Längsachse der Spindel aufgrund der nicht kreisförmigen Gestalt der Außenumfangsfläche des Hohlschaftes und der Innenumfangsfläche der Spindelaufnahme unterbunden ist.

Ganz besonders bevorzugt ist es dabei, wenn die Außenumfangsfläche des Hohlschaftes im Querschnitt als Polygon gestaltet ist, der vorzugsweise abgerundete Ecken besitzt, da auf diese weise eine besonders einfache Ausrichtung relativ zueinander ermöglicht ist. Dieses Ziel wird auch dadurch gefördert, dass im Querschnitt die Verbindungslinie zweier Ecken konvex geformt ist, wobei vorzugsweise die Querschnittsgestalt des Hohlschaftes als Epitrochoid geformt ist, also scharfe Ecken und Kanten in dieser Umfangsgestalt vermieden sind.

Hinsichtlich eines geringen Aufwandes bei der Fertigung ist es ausreichend, wenn das Polygon mit drei Ecken geformt ist.

Außerdem ist im Rahmen der Erfindung, wie bei Hohlschaftkegeln üblich, vorgesehen, dass der Hohlschaft sich zu seinem freien Ende hin verjüngt und die Spindelaufnahme korrespondierend gestaltet ist, so dass eine Selbstzentrierung und eine starke Spannung erreicht wird, wenn aufgrund des Niederzugseffektes, bewirkt durch die Spannschräge, der Hohlschaftkegel in die Spindelaufnahme gespannt wird.

Um den Wechsel eines Hohlschaftkegels, für den in der Regel Ladereinrichtungen verwendet werden, zu vereinfachen, ist im Rahmen der Erfindung vorgesehen, dass der Arbeitsspindel eine Haltezange zugeordnet ist, in der sich parallel zu den Spannklauen erstreckende, in radialer Richtung federnde Haltezunge ausgebildet sind, die zu den Spannschrägen korrespondierend geneigte Halteflächen aufweisen, die in der Ruhestellung der Haltezunge den Spannschrägen anliegen. Um die Montage der Spannvorrichtung zu vereinfachen, sind die Spannklauen zu einer Segmentespannzange zusammengefasst, die durch einen Gummidruckstücke in der Spannnut der Arbeitsspindel gehalten sind.

Im folgenden wird die Erfindung an einem in der Zeichnung dargestellten Ausführungsbeispiel näher erläutert; es zeigen:
- Fig. 1: einen Längsschnitt durch das einen Hohlschaftkegel haltende axiale Ende einer Spannvorrichtung, und

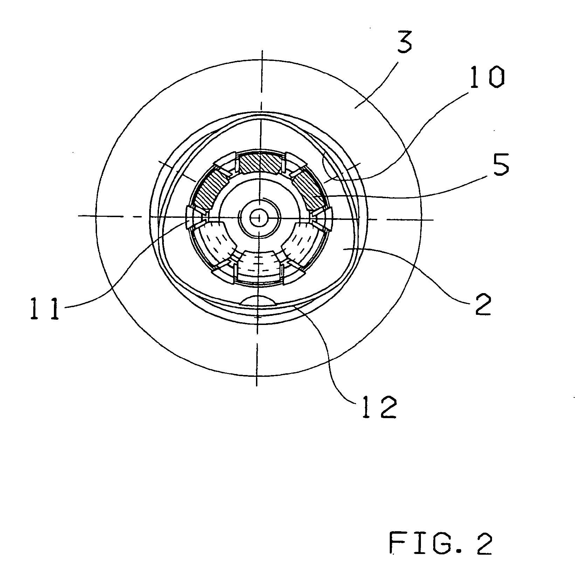

- Fig. 2: eine Vorderansicht auf das freie Ende einer Spannvorrichtung mit der als Epitrochoid geformten Spindelaufnahme und dem Hohlschaftkegel.

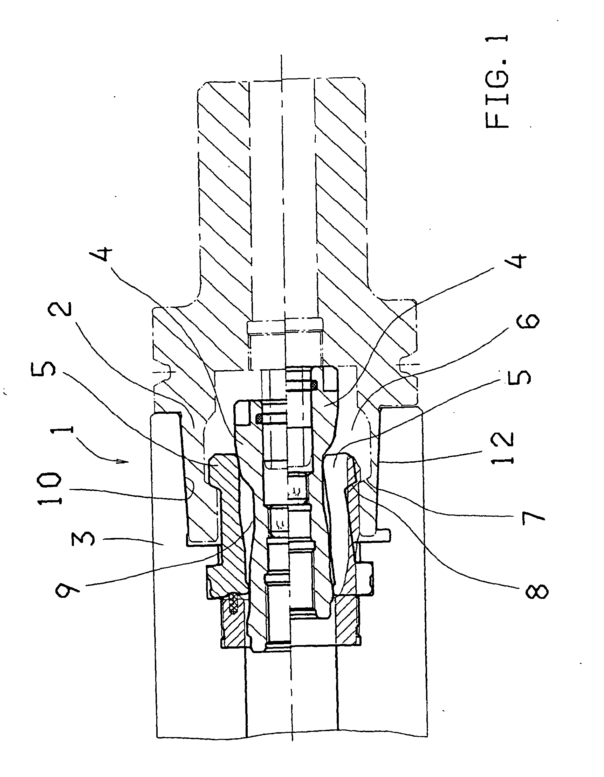

Von einer Spannvorrichtung 1, die aus der Technik bekannt und beispielsweise in der DE 41 38 974 A1 beschrieben ist, so dass diese hier nicht detailliert erläutert zu werden braucht, ist in der Figur 1 das die Erfindung betreffende, einem Hohlschaftkegel 2 zugewandte axiale Ende gezeigt. Ein Spannkopf 4 in der Arbeitsspindel 3 ist mit einer Zugstange verbunden, die in axialer Richtung der Arbeitsspindel 3 verstellbar ist, so dass der Spannkopf 4 aus der in der Figur 1 unten gezeigten Lösestellung in die in oben gezeigte Spannstellung überführbar ist, bei der die Spannklauen 5 im Eingriff mit dem Hohlschaftkegel 2 sind. In der Hohlschaftaufnahme 6 sind geneigt verlaufende Spannschrägen 7 ausgebildet, an denen die Spannklauen 5 mit korrespondierend geneigten Schrägflächen 8 zur Anlage kommen, wenn der Spannkopf 4 in Figur 1 axial nach links verschoben wird, so dass die Spannklauen 5 aus der Verjüngung 9 des Spannkopfes 4 heraus radial nach außen verstellt werden, um den Hohlschaftkegel 2 infolge der Neigung der Spannschrägen 7 und der Schrägflächen 8 weiter axial nach links zu verschieben. Um das zwischen der Spindelaufnahme 10 und dem Hohlschaftkegel 2 vorhandene Fügungsspiel zu beseitigen, besitzt die Außenumfangsfläche 12 des Hohlschaftes im Querschnitt eine nicht kreisförmige Gestalt und die Spindelaufnahme 10 dazu korrespondierende Gestalt, die als Polygon mit abgerundeten Ecken beschrieben werden kann, wobei im Querschnitt die Verbindungslinien zweier Ecken konvex geformt ist.

Bei dem in der Zeichnung dargestellten Ausführungsbeispiel sind dem Polygon drei Ecken zugeordnet. Da weiterhin der Hohlschaft sich zu seinem freien Ende hin verjüngt und die Spindelaufnahme 10 korrespondierend gestaltet ist, kann eine Beschreibung des Hohlschaftes als polygonaler Kegel erfolgen.

Um das Laden und Beladen der Spindelaufnahme 10 mit dem Hohlschaftkegel 2 zu vereinfachen, ist der Arbeitsspindel 3 eine Haltezange zugeordnet, in der sich parallel zu den Spannklauen erstreckende, in radialer Richtung federnde Haltezungen 11 ausgebildet sind, die zu den Spannschrägen 7 korrespondierend geneigte Halteflächen aufweisen, die in der Ruhestellung der Haltezungen 11 den Spannschrägen 7 anliegen, wobei die Spannklauen zu einer Segmentspannzange zusammengefasst sind, die durch Gummidruckstücke in der Spannnut der Arbeitsspindel 3 gehalten sind.

## Patentansprüche

1. Spannvorrichtung für einen Hohlschaft an einem Hohlschaftkegel (2), Werkzeug, Werkstück oder dergl., mit einer eine Spindelaufnahme (10) für den Hohlschaft aufweisenden Arbeitsspindel (3) und mit in der Hohlschaftaufnahme (6) des Hohlschaftes (2) ausgebildeten, geneigt verlaufenden Spannschrägen (7), an denen durch einen axial verschieblichen, in der Arbeitsspindel (3) geführten Spannkopf (4) betätigbare, an der Arbeitsspindel (3) gelagerte Spannklauen (5) mit korrespondierend geneigten Schrägflächen (8) zur Anlage kommen, **dadurch gekennzeichnet, dass** die Aussenumfangsfläche (12) des Hohlschaftes im Querschnitt eine nicht kreisförmige Gestalt und die Spindelaufnahme (10) eine dazu korrespondierende Gestalt besitzt.

2. Spannvorrichtung nach Anspruch 1, **dadurch gekennzeichnet, dass** die Aussenumfangsfläche (12) des Hohlschaftes im Querschnitt als Polygon gestaltet ist.

3. Spannvorrichtung nach Anspruch 2, **dadurch gekennzeichnet, dass** die Ecken des Polygon abgerundet sind.

4. Spannvorrichtung nach Anspruch 2 oder 3, **dadurch gekennzeichnet, dass** im Querschnitt die Verbindungslinie zweier Ecken konvex geformt ist.

5. Spannvorrichtung nach Anspruch 4, **dadurch gekennzeichnet, dass** die Querschnittsgestalt des Hohlschaftes als Epitrochoid geformt ist.

6. Spannvorrichtung nach einem der Ansprüche 2 bis 5, **dadurch gekennzeichnet, dass** das Polygon mit 3 Ecken geformt ist.

7. Spannvorrichtung nach einem der Ansprüche 1 bis 6, **dadurch gekennzeichnet, dass** der Hohlschaft sich zu seinem freien Ende hin verjüngt und die Spindelaufnahme (10) korrespondierend gestaltet ist.

8. Spannvorrichtung nach einem der Ansprüche 1 bis 7, **dadurch gekennzeichnet, dass** der Arbeitsspindel (3) eine Haltezange zugeordnet ist, an der sich parallel zu den Spannklauen (5) erstreckende, in radialer Richtung federnde Haltezungen (11) ausgebildet sind, die zu den Spannschrägen (7) korrespondierend geneigte Halteflächen aufweisen, die in der Ruhestellung der Haltezungen (11) den Spannschrägen (7) anliegen.

9. Spannvorrichtung nach Anspruch 8, **dadurch gekennzeichnet, dass** die Spannklauen (5) zu einer Segmentspannzange zusammengefasst sind, die durch Gummidruckstücke in der Spannnut der Arbeitsspindel gehalten sind.

## Claims

1. A clamping device for a hollow shaft on a hollow shaft taper (2), tool, workpiece or the like, comprising a working spindle (3) having a spindle receiving means (10) for the hollow shaft and inclinedly extending clamping bevels (7) which are provided in the hollow shaft receiving means (6) of the hollow shaft (2) and against which come to bear clamping claws (5) with correspondingly inclined surfaces (8), the clamping claws (5) being mounted to the working spindle (3) and being actuable by an axially displaceable clamping head (4) guided in the working spindle (3), **characterised in that** the outside peripheral surface (12) of the hollow shaft in cross-section is of a non-circular configuration and the spindle receiving means (10) is of a configuration corresponding thereto.

2. A clamping device according to claim 1 **characterised in that** the outside peripheral surface (12) of the hollow shaft is in the form of a polygon in cross-section.

3. A clamping device according to claim 2 **characterised in that** the corners of the polygon are rounded off.

4. A clamping device according to claim 2 or claim 3 **characterised in that** the connecting line of two corners is convexly shaped in cross-section.

5. A clamping device according to claim 4 **characterised in that** the cross-sectional configuration of the hollow shaft is in the form of an epitrochoid.

6. A clamping device according to one of claims 2 to 5 **characterised in that** the polygon is formed with three corners.

7. A clamping device according to one of claims 1 to 6 **characterised in that** the hollow shaft tapers towards its free end and the spindle receiving means (10) is of a corresponding configuration.

8. A clamping device according to one of claims 1 to 7 **characterised in that** associated with the working spindle (3) is a holding collet on which there are holding tongues (11) which extend parallel to the clamping claws (5) and which are resilient in the radial direction and which have holding surfaces, the holding surfaces being inclined corresponding to the clamping bevels (7) and bearing in the rest position of the holding tongues (11) against the clamping bevels (7).

9. A clamping device according to claim 8 **characterised in that** the clamping claws (5) are combined to provide a segment clamping collet, which are held by rubber pressure portions in the clamping groove in the working spindle.

## Revendications

1. Dispositif de serrage pour une queue creuse d'un cône à queue creuse (2), d'un outil, d'une pièce à usiner ou d'un élément analogue, comprenant une broche d'usinage (3), présentant un logement de broche (10) destiné à recevoir la queue creuse, et comprenant des chanfreins de serrage (7) inclinés, réalisés dans le logement (6) de la queue creuse (2), sur lesquels viennent en appui, avec des surfaces obliques (8) inclinées de façon correspondante, des griffes de serrage (5) montées sur la broche d'usinage (3) et actionnées par une tête de serrage (4) guidée avec possibilité de déplacement axial dans la broche d'usinage (3), **caractérisé par le fait que** la surface périphérique extérieure (12) de la queue creuse présente une section de forme non circulaire et le logement de broche (10) a une forme correspondante.

2. Dispositif de serrage selon la revendication 1, **caractérisé par le fait que** la surface périphérique extérieure (12) de la queue creuse présente une section en forme de polygone.

3. Dispositif de serrage selon la revendication 2, **caractérisé par le fait que** les angles du polygone sont arrondis.

4. Dispositif de serrage selon la revendication 2 ou 3, **caractérisé par le fait que**, vue en section transversale, la ligne de jonction de deux angles a une forme convexe.

5. Dispositif de serrage selon la revendication 4, **caractérisé par le fait que** le profil transversal de la queue creuse présente la forme d'un épitrochoïde.

6. Dispositif de serrage selon une des revendications 2 à 5, **caractérisé par le fait que** le polygone est formé avec trois angles.

7. Dispositif de serrage selon une des revendications 1 à 6, **caractérisé par le fait que** la queue creuse a une section décroissante en direction de son extrémité libre, et le logement de broche (10) a une forme correspondante.

8. Dispositif de serrage selon une des revendications 1 à 7, **caractérisé par le fait qu'**est associée à la broche d'usinage (3), une pince de maintien sur laquelle sont réalisées des dents de maintien (11) à élasticité radiale qui s'étendent parallèlement aux griffes de serrage (5) et présentent des surfaces de maintien dont l'inclinaison correspond à celle des chanfreins de serrage (7) et qui, en position de repos des dents de maintien (11), sont appliquées contre les chanfreins de serrage (7).

9. Dispositif de serrage selon la revendication 8, **caractérisé par le fait que** les griffes de serrage (5) sont regroupées pour former une pince de serrage segmentée, en étant maintenues par des pièces de pression en caoutchouc dans la rainure de serrage de la broche d'usinage.
